Europäisches Patentamt

European Patent Office

Office européen des brevets

(19)

(11) **EP 1 051 859 B1**

(12) **EUROPEAN PATENT SPECIFICATION**

(45) Date of publication and mention
of the grant of the patent:
**04.06.2003 Bulletin 2003/23**

(51) Int Cl.7: **H04N 9/31**, G03B 21/62,
G02B 5/32

(21) Application number: **98904761.8**

(22) Date of filing: **29.01.1998**

(86) International application number:
**PCT/US98/01739**

(87) International publication number:
**WO 99/039515 (05.08.1999 Gazette 1999/31)**

(54) **DIRECT PROJECTION TELEVISION WITH THREE DIMENSIONAL HOLOGRAPHIC SCREEN**

DIREKTPROJEKTIONSFERNSEHGERÄT MIT DREIDIMENSIONALEM HOLOGRAPHISCHEM
BILDSCHIRM

TELEVISEUR A PROJECTION DIRECTE A ECRAN HOLOGRAPHIQUE TRIDIMENSIONNEL

(84) Designated Contracting States:
**DE FR GB IT**

(43) Date of publication of application:
**15.11.2000 Bulletin 2000/46**

(73) Proprietor: **Thomson Licensing S.A.**
**92648 Boulogne Cedex (FR)**

(72) Inventors:
 • **HALL, Estill, Thone, Jr.**
 **Fishers, IN 46038 (US)**
 • **PFILE, Wendy, Rene**
 **Indianapolis, IN 46226 (US)**

(74) Representative: **Ruellan-Lemonnier, Brigitte et al**
**THOMSON multimedia,**
**46 quai A. Le Gallo**
**92648 Boulogne Cédex (FR)**

(56) References cited:
 **EP-A- 0 479 490**     **EP-A- 0 671 653**
 **EP-A- 0 751 419**     **WO-A-95/04303**
 **WO-A-95/34832**     **WO-A-96/07953**
 **WO-A-97/10523**     **US-A- 5 046 793**
 **US-A- 5 796 499**

 • **PATENT ABSTRACTS OF JAPAN vol. 97, no. 7,
 31 July 1997 & JP 09 073132 A (CASIO
 COMPUTER LTD), 18 March 1997**
 • **PATENT ABSTRACTS OF JAPAN vol. 18, no. 333
 (P-1759), 23 June 1994 & JP 06 082625 A (RICOH
 CO LTD)**

## Description

## BACKGROUND

### Field of the Invention

This invention relates generally to the field of projection television receivers, and in particular, to direct projection television receivers having screens providing significantly reduced color shift with various cabinet configurations using a direct projections system without the need for a large reflecting mirror.

### Background Information

Color shift is defined as the change in the red/blue or green/blue ratio of a white image formed at the center of a projection screen by projected images from red, green and blue projection tubes, when viewed at different angles in the horizontal plane, by observations made at the peak brightness vertical viewing angle.

The color shift problem is caused by the need for at least three image projectors for respective images of different colors, for example, red, blue and green. A projection screen receives images from the at least three projectors on a first side and displays the images on a second side with controlled light dispersion of all the displayed images. One of the projectors, usually green and usually in the center of an array of projectors, has a first optical path in a substantially orthogonal orientation with the screen. At least two of the projectors, usually red and blue and usually positioned on opposite sides of the central green projector in the array, have respective optical paths converging toward the first optical path in a non orthogonal orientation defining angles of incidence. Color shift results from the non orthogonal relationship of the red and blue projectors, relative to the screen and to the green projector. As a result of the color shift, color tones may differ at every position on the screen. The condition in which the color tone difference is large is often referred to as poor white uniformity. The smaller the color shift, the better the white uniformity.

Color shift is denoted by a scale of numbers, in which lower numbers indicate less color shift and better white uniformity. In accordance with a common procedure, values for the red, green and blue luminance are measured at the screen center from a variety of horizontal viewing angles, typically from at least about -40° to +40°, to as much as about -60° to +60°, in 5° or 10° increments. The positive and negative angles represent horizontal viewing angles to the right and left of screen center, respectively. These measurements are taken at the peak vertical viewing angle. The red, green and blue data is normalized to unity at 0°. One or both of the following equations (I) and (II) are evaluated at each angle:

$$C(\Theta) = 20 \cdot \log_{10}(\frac{red(\Theta)}{blue(\Theta)}); \qquad \text{(I)}$$

$$C(\Theta) = 20 \cdot \log_{10}(\frac{green(\Theta)}{blue(\Theta)}) \qquad \text{(II)}$$

where θ is any angle within a range horizontal viewing angles, C(θ) is the color shift at angle θ, red(θ) is the red luminance level at angle θ, blue(θ) is the blue luminance level at angle θ and green(θ) is the green luminance level at angle θ. The maximum of these values is the color shift of the screen.

In general, color shift-should be no larger than 5, nominally, on any commercially acceptable screen design. Other engineering and design constraints may sometimes require that the color shift be somewhat higher than 5, although such color shift performance is not desirable and usually results in a perceptibly inferior picture with poor white uniformity.

Screens for projection television receivers are generally manufactured by an extrusion process utilizing one or more patterned rollers to shape the surface of a thermoplastic sheet material. The configuration is generally an array of lenticular elements, also referred to as lenticules and lenslets. The lenticular elements may be formed on one or both sides of the same sheet material or on one side only of different sheets which can then be permanently combined as a laminated unit or otherwise mounted adjacent to one another so as to function as a laminated unit. In many designs, one of the surfaces of the screen is configured as a Fresnel lens to provide light diffusion. Prior art efforts to reduce color shift and improve white uniformity have focused exclusively on two aspects of the screen. One aspect is the shape and disposition of the lenticular elements. The other aspect is the extent to which the screen material, or portions thereof, are doped with light diffusing particles to control light diffusion. These efforts are exemplified by the following patent documents.

In US 4,432,010 and US 4,536,056, a projection screen includes a light-transmitting lenticular sheet having an input surface and an exit surface. The input surface is characterized by horizontally diffusing lenticular profiles having a ratio of a lenticulated depth Xv to a close-axis-curvature radius R1 (Xv/R1) which is within the range of 0.5 to 1.8. The profiles are elongated along the optical axis and form aspherical input lenticular lenses.

The use of a screen with a double sided lenticular lens is common. Such a screen has cylindrical entrance lenticular elements on an entrance surface of the screen, cylindrical lenticular elements formed on an exit surface of the screen and a light absorbing layer formed at the light non convergent part of the exit surface. The entrance and the exit lenticular elements each have the shape of a circle, ellipse or hyperbola represented by the following equation (III):

$$Z(x) = \frac{Cx^2}{1 + [1-(k+1)C^2x^2]^{\frac{1}{2}}} \qquad (III)$$

wherein C is a main curvature and K is a conic constant.

Alternatively, the lenslets have a curve to which a term with a higher order than 2nd order has been added.

In screens making use of such a double sided lenticular lens, it has been proposed to specify the position relationship between the entrance lens and exit lens, or the lenticular elements forming the lenses. It has been taught, for example in US 4,443,814, to position the entrance lens and exit lens in such a way that the lens surface of one lens is present at the focal point of the other lens. It has also been taught, for example in JP 58-59436, that the eccentricity of the entrance lens be substantially equal to a reciprocal of the refractive index of the material constituting the lenticular lens. It has further been taught, for example in US 4,502,755, to combine two sheets of double-sided lenticular lenses in such a way that the optic axis planes of the respective lenticular lenses are at right angles with respect to one another, and to form such double sided lenticular lenses in such a way that the entrance lens and exit lens at the periphery of one of the lenses are asymmetric with respect to the optic axis. It is also taught, in US 4,953,948, that the position of light convergence only at the valley of an entrance lens should be offset toward the viewing side from the surface of an exit lens so that the tolerance for misalignment of optic axes and the difference in thickness can be made larger or the color shift can be made smaller.

In addition to the various proposals for decreasing the color shift or white non uniformity, other proposals for improving projection screen performance are directed to brightening pictures, and ensuring appropriate visual fields in both the horizontal and vertical directions. Such techniques are not of direct interest and are not described in detail. A summary of many such proposals can be found in US 5,196,960, which itself teaches a double sided lenticular lens sheet comprising an entrance lens layer having an entrance lens, and an exit lens layer having an exit lens whose lens surface is formed at the light convergent point of the entrance lens, or in the vicinity thereof, wherein the entrance lens layer and the exit lens layer are each formed of a substantially transparent thermoplastic resin and at least the exit layer contains light diffusing fine particles and wherein a difference exists in the light diffusion properties between the entrance lens layer and the exit lens layer. A plurality of entrance lenses comprise a cylindrical lens. The exit lens is formed of a plurality of exit lens layers, each having a lens surface at the light convergent point of each lens of the entrance lens layer, or in the vicinity thereof. A light absorbing layer is also formed at the light non convergent part of the exit lens layer. This screen design is said to provide sufficient horizontal visual field angle, decreased color shift and a brighter picture, as well as ease of manufacture by extrusion processes.

Despite many years of aggressive developments in projection screen design, the improvements have been incremental, at best. Moreover, there has been no success in surpassing certain benchmarks. The angle of incidence defined by the geometric arrangement of the image projectors, referred to as angle α herein, has generally been limited to the range of greater than 0° and less than or equal to about 10° or 11°. The size of the image projectors makes angles of α close to 0° essentially impossible. In the range of the angles of α less than about 10° or 11°, the best color shift performance which has been achieved is about 5, as determined in accordance with equations (I) and (II). In the range of the angles of a greater than about 10° or 11°, the best color shift performance which has been achieved is not commercially acceptable. In fact, projection television receivers having angles of α greater than 10° or 11° are not known.

Small angles of α have a significant and undesirable consequence, namely the very large cabinet depth needed to house a projection television receiver. The large depth is a direct result of the need to accommodate optical paths having small angles of incidence (α). Techniques for reducing the size of projection television cabinets generally rely on arrangements of mirrors. Such efforts are also ultimately limited by the small range of angles of incidence.

Polaroid Corporation sells a photo polymer designated DMP-128®, which Polaroid Corporation can manufacture as a three dimensional hologram, using proprietary processes. The holographic manufacturing process is described, in part, in US 5,576,853. A three dimensional holographic screen for a projection television was proposed by Polaroid Corporation, as one of many suggestions made during efforts to establish a market for the DMP-128® photo polymer holographic product. The proposal was based on advantages which Polaroid Corporation expected in terms of higher brightness and resolution, lower manufacturing cost, lower weight, and resistance to the abrasion to which two-piece screens are subjected during shipping. Polaroid Corporation never proposed any particular holographic configuration for the volume holographic elements which might make up such a holographic projection television screen, and never even considered the problem of color shift in projection television screens of any type, holographic or otherwise.

Overall, despite years of intensive development to provide a projection television receiver having a screen with a color shift less than 5, even significantly less than 5, or having a color shift as low as 5 for angles of α even greater than 10° or 11°, there have been no advances in solving the color shift problem other than incremental changes in the shapes and positions of lenticular elements and diffusers in conventional projection screens. Moreover, despite suggestions that three dimensional holograms might be useful for projection screens, although for reasons having nothing to do with color shift, there has been no effort to provide projection televisions with three dimensional holographic screens. A long felt need for a projection television receiver having significantly improved color shift performance, which can also be built into a significantly smaller cabinet, has remained unsatisfied.

The following documents belong also to the technical background of the invention :

JP 09-073132 discloses a projection television comprising three image projectors 1, 2, 3 for projecting images of different colors onto a holographic projection screen.

WO96107953 discloses an image projection device comprising one projector for projecting images of different colors onto a screen comprising a structure of juxtaposed cylindrical lenses to direct light toward the audience and diffusing means made of a volume hologram.

EP671653 discloses a standard projection screen comprising a rear Fresnel-lens sheet, a lenticular sheet that is adapted to refract light toward a group of viewers, and a diffusion layer.

EP0463888 discloses a font-end display comprising an imager or an indicator forming an image on its active surface, optical means such as a lens to project this image on a volume-type holographic screen that is adapted to reflect and diffract light toward each eye of a viewer. An image with more than two colors can be realized with a hologram made by laminating or multi-recording a plurality of holograms.

## SUMMARY

A projection television receiver in accordance with the inventive arrangements taught herein provides a direct projection system without the need for large mirrors and also provides a significant improvement in color shift performance, measured in orders of magnitude, that a color shift of 2 or less can be achieved with projection television receivers having angles of incidence $\alpha$ in the range of less than 10° or 11°. Moreover, the color shift performance is so significant that commercially acceptable projection television receivers having angles of incidence up to about 30° can be provided, in much smaller cabinets. The color shift performance of such large $\alpha$ angle receivers is at least as good as conventional small $\alpha$ angle receivers, for example having a color shift of 5, and can be expected to approach or even reach values as low as about 2, as in the small $\alpha$ angle receivers.

These results are achieved by forsaking the extruded lens screen technology altogether. Instead, the projection television receiver in accordance with the inventive arrangement has a screen formed by a three dimensional hologram formed on a substrate, for example, a polyethylene film, such as Mylar®.

Such a three dimensional holographic screen was originally developed for its expected advantages in terms of higher brightness and resolution, and lower manufacturing cost, lower weight and resistance to abrasion to which two-piece screens are subjected, for example during shipping. The discovery of the color shift performance of the three dimensional holographic screen came about when testing to determine if the optical properties of the three dimensional screen would be at least as good as a conventional screen. The color shift performance of the three dimensional holographic screen, as measured by equations (I) and (II), was so unexpectedly low as to be shocking. The barriers which limited prior art improvements to incremental steps had been eliminated altogether. Moreover, smaller cabinets with projection geometry characterized by larger $\alpha$ angles of incidence can now be developed.

A projection television having the unexpected properties associated with three dimensional holographic screens, and in accordance with the inventive arrangements taught herein is set out in claim 1.

The color shift of the screen can be expected to be less than 5, for example, less than or equal to approximately 4, 3 or even 2.

In terms of the known barrier at an angle of incidence of about 10° or 11°, the color shift of the screen is less than or equal to approximately 2 for all the angles of incidence in a first subrange of angles of incidence greater than 0° and less than or equal to approximately 10°; and, the color shift of the screen is less than or equal to approximately 5 for all the angles of incidence in a second subrange of angles of incidence greater than approximately 10° and less than or equal to approximately 30°.

The screen further comprises a light transmissive reinforcing member, for example, of an acrylic material in a layer having a thickness in the range of approximately 2 - 4 mm. The substrate comprises a highly durable, transparent, water-repellent film, such as a polyethylene terephthalate resin film. The substrate can be a film having a thickness in the range of about 1 - 10 mils. A thickness of about 7 mils has been found to provide adequate support for the three dimensional hologram. The thickness of the film is not related to performance. The three dimensional hologram has a thickness in the range of not more than approximately 20 microns. In accordance with the inventive arrangements, the projection television also comprises image projectors provided a cathode ray tube and an angular lens for directing an image onto the screen thereby eliminating the need for large mirrors between the image projectors and the screen. One or more lenses may be interspersed between the cathode ray tube and the angular lens and/or between the angular lens and the screen for collecting and/or spreading the light from the cathode ray tube.

## BRIEF DESCRIPTION OF THE DRAWINGS

FIGURE 1 is a diagrammatic representation of a projection television in accordance with the inventive arrangements taught herein.

FIGURE 2 is a simplified diagram of projection television geometry useful for explaining the inventive arrangements.

FIGURE 3 is a side elevation of a reinforced projection screen according to the inventive arrangements.

FIGURE 4 is a diagrammatic representation of an image projector having a cathode ray tube and an angled lens according to the inventive arrangements.

FIGURE 5 is a diagrammatic representation of a projection television system installed in a cabinet having storage for electronics within the lower portion of the cabinet body.

FIGURE 6 is a diagrammatic representation of an alternate embodiment projection television system installed in a cabinet having storage for electronics within the upper and lower cabinet body.

FIGURE 7 is a diagrammatic representation of an alternate embodiment projection television system installed in a cabinet having storage for electronics within the upper cabinet body.

FIGURE 8 is a diagrammatic representation of an alternate embodiment projection television system installed in a cabinet having storage for electronics within the upper cabinet body and general storage in the lower portion of the cabinet body.

## DESCRIPTION OF THE PREFFRRED EMBODIMENTS

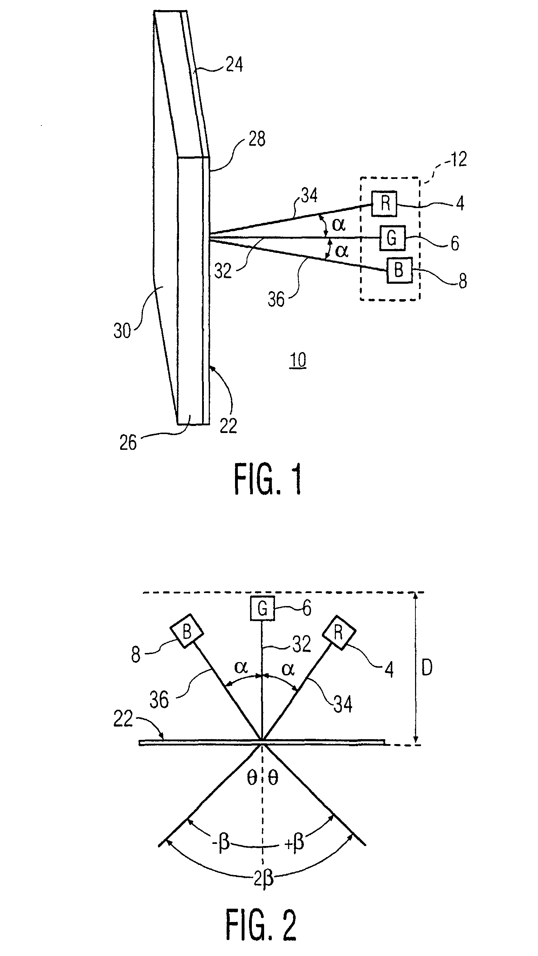

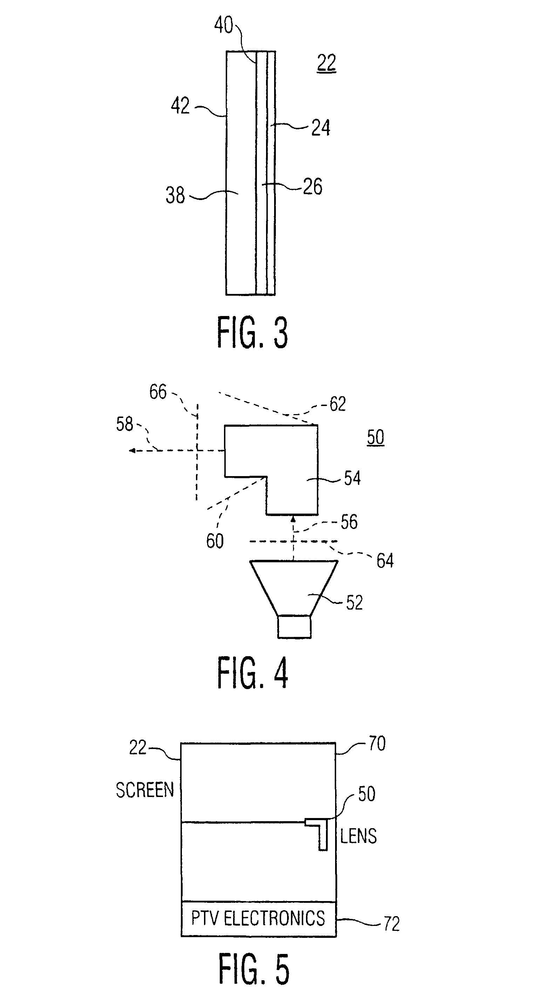

A projection television receiver 10 is illustrated in FIGURE 1. An array 12 of projectors 4, 6, and 8 provide red, green and blue images respectively. The projectors are provided with cathode ray tubes with angular lenses for directing a images onto screen 22 without the need for a large reflecting mirror (see FIGURE 4). The green projector 6 projects the green image along an optical path 32, which has a substantially orthogonal orientation with screen 22. In other words, the optical path is at right angles to the screen. The red and blue projectors have respective optical paths 34 and 36, which converge toward the first optical path 32 in a non orthogonal orientation defining angles of incidence $\alpha$. The angles of incidence introduce the problem of color shift.

The screen 22 comprises a three dimensional hologram 26 disposed on a substrate 24 (holographic element screen). The screen receives images from the projectors on a first, entrance surface side 28 and displays the images on a second, exit surface side 30, with controlled light dispersion of all the displayed images.

The substrate is preferably a highly durable, transparent, water-repellent film, such as a polyethylene terephthalate resin film. One such film is available from E. I. du Pont de Nemours & Co. under the trademark Mylar®. The film substrate has a thickness in the range of about 1 - 10 mils, equivalent to about .001 - .01 inches or about 25.4 - 254 microns. A film having a thickness of about 7 mils has been found to provide adequate support for the three dimensional hologram disposed thereon. The thickness of the film does not affect screen performance in general or color shift performance in particular, and films of different thickness may be utilized. The three dimensional hologram 26 has a thickness of not more than approximately 20 microns.

Three dimensional holographic screens are available from at least two sources. Polaroid Corporation utilizes a proprietary, wet chemical process to form three dimensional holograms in its DMP-128 photo polymer material.

A preferred embodiment of the three dimensional holographic screens used in the projection television receivers described and claimed herein were manufactured by the Polaroid Corporation wet chemical process, in accordance with the following performance specifications:

Horizontal half viewing angle: 38° ± 3°,
Vertical half viewing angle: 10° ± 1°,
Screen gain: ≥8,
Color shift: ≤ 3,

where the horizontal and vertical viewing angles are measured conventionally, screen gain is the quotient of light intensity directed from the source toward the rear of the viewing surface, and light intensity from the front of the viewing surface toward the viewer, measured orthogonal to the screen, and color shift is measured as described above.

The extraordinary color shift performance of the three dimensional holographic projection screen was, as explained in the Summary, wholly unexpected.

FIGURE 2 is a simplified projection television diagram, omitting the mirror and lenses, for explaining color shift performance. The optical axes 34 and 36 of the red and blue projectors 4 and 8 are aligned symmetrically at angles of incidence $\alpha$ with respect to the optical axis 32 of the green projector 6. The minimum depth D of a cabinet is determined by the distance between the screen 22 and the rear edges of one or more of the projectors. It will be appreciated that as the angle $\alpha$ becomes smaller, the cathode ray tubes move closer together, and must be spaced further from the screen to avoid hitting one another. At a sufficiently small angle $\alpha$, such interference cannot be avoided. This undesirably increases the minimum depth D of a cabinet. Conversely, as the angle $\alpha$ gets larger, the cathode ray tubes can be moved closer to the screen 22, reducing the minimum depth D of a cabinet.

On the viewing side of the screen 22, two horizontal half viewing angles are designated -β and +β. Together, a total horizontal viewing angle of 2β is defined. The half viewing angles may typically range from ± 40° to ± 60°. Within each half angle are a plurality of specific angles θ, at which color shift can be measured and determined,in accordance with equations (I) and (II) explained above.

In terms of the known barrier at an angle of incidence of about 10° or 11°, the color shift of the three dimensional holographic screen is less than or equal to approximately 2 for all the angles of incidence in a first subrange of angles of incidence greater than 0° and less than or equal to approximately 10°; and, the color shift of the screen is less than or equal to approximately 5 for all the angles of incidence in a second subrange of angles of incidence greater than approximately 10° and less than or equal to approximately 30°. It is expected that a color shift of less than or equal to approximately 2, as in the first subrange, can also be achieved in the second subrange of larger angles of incidence.

With reference to FIGURE 3, the substrate 24 comprises a transparent film, such as Mylar®, as described above. The photo polymer material from which the three dimensional hologram 26 is formed is supported on the film layer 24. A suitable photo polymer material is DMP-128®.

The screen 22 may further comprise a light transmissive reinforcing member 38, for example, of an acrylic material, such as polymethylmethacrylate (PMMA). Polycarbonate materials can also be used. The reinforcing member 38 is presently a layer having a thickness in the range of approximately 2 - 4 mm. The screen 22 and the reinforcing member are adhered to one another throughout the mutual boundary 40 of the holographic layer 26 and the reinforcing member 38. Adhesive, radiation and/or thermal bonding techniques may be utilized. The surface 42 of the reinforcing layer may also be treated, for example by one or more of the following: tinting, anti-glare coatings and anti-scratch coatings.

Various surfaces of the screen and/or its constituent layers may be provided with other optical lenses or lenticular arrays to control aspects of the projection screen bearing on performance characteristics other than color shift performance, as is known to do with conventional projection screens, without impairing the improved color shift performance of the three dimensional holographic projection screen.

FIGURE 4 shows a diagrammatic representation of an image projector 50 having a cathode ray tube 52 and an angled lens 54 in accordance with the invention. The cathode ray tube generates light which travels in the direction of arrow 56 into angled lens 54. Angled lens 54 redirects the light from the cathode ray tube for projection onto the screen as shown by arrow 58. The angled lens 54 is show as generally providing a right angle redirection of light. In the alternative, angled lens can redirect light from the cathode ray tube by more or less than 45° as shown by arrows 60 and 62 respectively. Intermediate lenses 64 are 66 can be provided to collect and/or spread the light from the cathode ray tube.

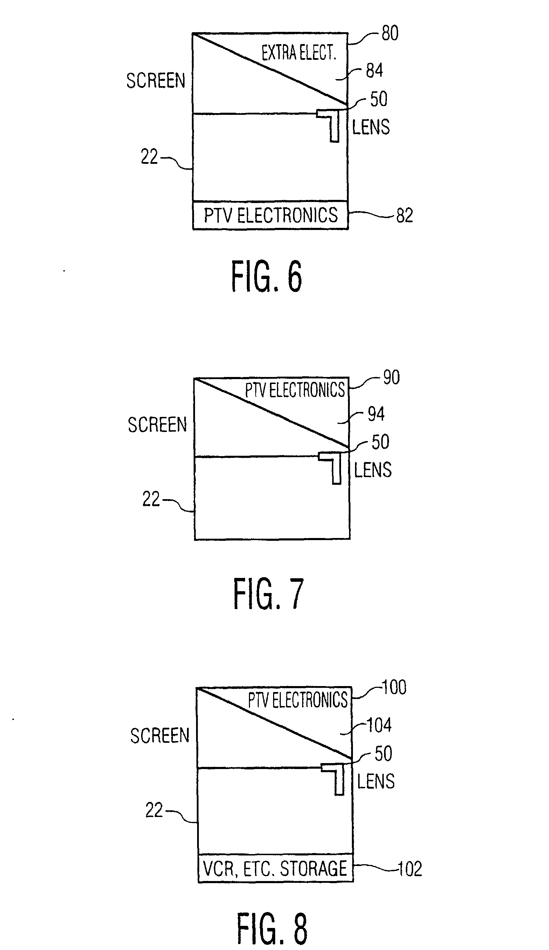

FIGURES 5-8 show various cabinet configurations now made possible by using image projectors with an angled lenses in combination with a holographic element screen. These configurations will require a relatively large angle of incidence α to provide space for the image projectors. In combination with the holographic element screen these cabinet configurations represent commercially acceptable projection television receivers some of which may have angles of incidence up to about 30°.

FIGURE 5 shows a diagrammatic representation of a projection television system installed in a cabinet 70 having a lower storage area 72 for storage of electronics within the lower portion of the cabinet body. Image projector 50 and its associated cathode ray tube and angled lens (not shown) project an image directly onto screen 22 without the need for a large mirror. In general, large mirrors are expensive to manufacture and are somewhat difficult to mount and align within a projection television cabinet. The configuration shown in FIGURE 5 eliminates the need for a large mirror and moves the image projectors higher within the cabinet 70 as compared to systems using a large mirror to reflect an image produced from a cathode ray tube. This provides increased space for lower storage area 72 in the base of the cabinet 72.

FIGURE 6 shows a diagrammatic representation of a projection television system installed in a cabinet 80 having a lower storage area 82 for storage of electronics within the lower portion of the cabinet body and an upper storage area 84 for storage of electronics within the upper portion of the cabinet body. This configuration makes maximum usage of the space within cabinet 80 for projection television systems which require large volumes of space for sophisticated supporting electronics.

FIGURE 7 shows a diagrammatic representation of a projection television system installed in a cabinet 90 having an upper storage area 94 for storage of electronics within the upper portion of the cabinet body. This configuration minimizes the height of the cabinet by eliminating unused space at the base of the cabinet 90.

FIGURE 8 shows a diagrammatic representation of a projection television system installed in a cabinet 100 having a lower storage area 102 for general storage (e.g., VCR, tapes, etc.) within the lower portion of the cabinet body and an upper storage area 104 for storage of electronics within the upper portion of the cabinet body.

## Claims

1. A projection television, comprising:

   at least three image projectors (14, 16, 18) for respective images of different colors, each of said image projectors having a cathode ray tube;
   a projection screen (22) formed by a three-dimensional hologram (26) disposed on a substrate (24) superimposed on a light transmissive panel (38), said screen receiving images from said projectors on a first side and displaying said images on a second side with controlled light dispersion of said displayed images;
   respective angled lenses (54) disposed in respective optical paths between each of the projectors (14, 16, 18) and the projection screen (22), the angled lenses refracting images from the projectors onto said first side and providing angle redirection of light comprised between approximately 45° and 135°;
   a first one of said image projectors having a first optical path to its respective angled lens and said other image projectors being oriented along respective optical paths converging on said screen with said first optical path within a range of angles of incidence ($\pm \alpha$) with respect to said first optical path;

   said three-dimensional hologram (26) representing a three-dimensional array of lenticular elements having a configuration effective for reducing color shift in said displayed images, the screen having a color shift (C) less than or equal to approximately five for all said angles of incidence ($\alpha$) in said range, wherein said range of angles of incidence ($\pm\alpha$) is greater than 0° and less than or equal to approximately 30° relative to said first optical path , as determined by the maximum value obtained from at least one of the following expressions:

   $$C(\Theta) = 20 \cdot \log_{10}(\frac{red(\Theta)}{blue(\Theta)});$$

   $$C(\Theta) = 20 \cdot \log_{10}(\frac{green(\Theta)}{blue(\Theta)})$$

   where $\Theta$ is any angle within range ($\pm\beta$) of horizontal viewing angles, $C(\Theta)$ is the color shift at angle $\Theta$, red($\Theta$) is the red luminance level at angle $\Theta$, blue ($\Theta$) is the blue luminance level at angle $\Theta$ and green ($\Theta$) is the green luminance level at angle $\Theta$.

2. The projection television of claim 1, wherein:

   the color shift of said screen (22) is less than or equal to approximately 2 for all said angles of incidence in a first subrange of angles of incidence greater than 0° and less than or equal to approximately 10°; and,
   the color shift of said screen (22) is less than or equal to approximately 5 for all said angles of incidence in a second subrange of angles of incidence greater than approximately 10° and less than or equal to approximately 30°.

3. The projection television of any of previous claims, wherein said three-dimensional hologram has the following performance specifications:

   Horizontal half viewing angle: 38° ± 3°
   Vertical half viewing angle: 10° ± 1°
   Screen gain: ≥ 8
   Color shift: ≤ 3.

4. The projection television of any of previous claims , further comprising a housing in which said image projectors are disposed, said housing having a storage area disposed in at least one of two locations respectively below said image projectors and above said angled lenses.

## Patentansprüche

1. Projektionsfernsehgerät mit:

   wenigstens drei Bildprojektoren (14, 16, 18) für jeweilige Bilder mit unterschiedlichen Farben, wobei jeder der Bildprojektoren eine Kathodenstrahlröhre enthält,
   einem Projektionsschirm (22) aus einem dreidimensionalen Hologramm (26) auf einem Substrat (24) auf einer lichtdurchlässigen Platte (38), wobei der Schirm auf einer ersten Seite Bilder von den Projektoren empfängt und die Bilder auf einer zweiten Seite mit einer gesteuerten Lichtdispersion der wiedergegebenen Bilder wiedergibt,
   jeweiligen winkelförmigen Linsen (54) in den jeweiligen optischen Wegen zwischen jedem der Projektoren (14, 16, 18) und dem Projektionsschirm (22), wobei die winkelförmigen Linsen Bilder von den Projektoren auf die erste Seite brechen und einen Winkel für die Umlenkung des Lichts zwischen ungefähr 45° und 135° bilden,

   wobei ein erster Projektor der Projektoren einen ersten optischen Weg zu seiner jeweiligen winkelförmigen Linse und die anderen Bildprojektoren entlang jeweiligen optischen Wegen ausgerichtet sind, die auf dem Schirm mit dem ersten optischen Weg innerhalb eines Bereichs von Einfallwinkeln ($\pm$ $\alpha$) relativ zu dem ersten optischen Weg konvergieren,

wobei das dreidimensionale Hologramm (26) eine dreidimensionale Anordnung von Linsenelementen mit einem Aufbau aufweist, der für die Verringerung der Farbverschiebung in den wiedergegebenen Bildern wirksam ist, und der Schirm eine Farbverschiebung (C) weniger als oder gleich ungefähr fünf für alle Einfallwinkel ($\alpha$) in dem Bereich aufweist, wobei der Bereich von Einfallwinkeln ($\pm \alpha$) größer als 0° und kleiner oder gleich ungefähr 30° relativ zu dem ersten optischen Weg ist, wie ermittelt durch den Maximalwert der den aus wenigstens einer der folgenden Gleichungen gewonnenen wird:

$$C(\Theta) = 20 \cdot \log_{10}(\frac{red(\Theta)}{blue(\Theta)});$$

$$C(\Theta) = 20 \cdot \log_{10}(\frac{green(\Theta)}{blue(\Theta)})$$

wobei $\Theta$ ein beliebiger Winkel innerhalb eines Bereichs ($\pm \beta$) von horizontalen Betrachtungswinkeln, C ($\Theta$) die Farbabweichung bei dem Winkel $\Theta$, red ($\Theta$) der rote Helligkeitswert bei dem Winkel $\Theta$ , blue ($\Theta$) der blaue Helligkeitswert bei dem Winkel $\Theta$ und green ($\Theta$) der grüne Helligkeitswert bei dem Winkel $\Theta$ist.

2. Projektionsfernsehgerät nach Anspruch 1, wobei:

die Farbabweichung des Schirms (22) kleiner als oder gleich ungefähr 2 für alle Einfallwinkel in einem ersten Unterbereich von Einfallwinkeln größer als 0° und kleiner als oder gleich ungefähr 10° ist, und
die Farbabweichung des Schirms (22) kleiner als oder gleich ungefähr 5 für alle Einfallwinkel in einem zweiten Unterbereich von Einfallwinkeln größer als ungefähr 10° und kleiner als oder gleich ungefähr 30° ist.

3. Projektionsfernsehgerät nach einem der vorangehenden Ansprüche, in dem das dreidimensionale Hologramm die folgenden Leistungsspezifikationen aufweist:

Horizontaler Halbetrachtungswinkel: 38° $\pm$ 3°
Vertikaler Halbbetrachtungswinkel: 10° $\pm$ 1°
Schirmverstärkung: $\geq$ 8
Farbabweichung: $\leq$ 3.

4. Projektionsfernsehgerät nach einem der vorangehenden Ansprüche mit einem Gehäuse, in dem die Bildprojektoren angeordnet sind, wobei das Gehäuse einen Speicherbereich an wenigstens zwei Stellen unterhalb der Bildprojektoren bzw. oberhalb der winkelförmigen Linsen aufweist.

**Revendications**

1. Téléviseur à projection comprenant :

Au moins trois projecteurs d'images (14, 16, 18) pour les images correspondantes de différentes couleurs, chacun desdits projecteurs d'images intégrant un tube à rayons cathodiques ;
un écran à projection (22) formé par un hologramme tri-dimensionnel (26) disposé sur un substrat (24) superposé sur un panneau de transmission de lumière (38), ledit écran recevant des images desdits projecteurs sur un premier côté et affichant lesdites images sur un second côté avec une dispersion de lumière contrôlée desdites images affichées ;
des lentilles d'angle correspondantes (54) disposées sur les chemins optiques correspondants entre chacun des projecteurs (14, 16, 18) et l'écran de projection (22) les lentilles d'angle réfractant les images depuis les projecteurs sur ledit premier côté et fournissant un réacheminement d'angle de lumière approximativement compris entre 45° et 135° ;
un premier desdits projecteurs d'images présentant un premier chemin optique vers sa lentille d'angle correspondante et lesdits autres projecteurs d'images étant orientés suivant les chemins optiques correspondants sur ledit écran avec ledit premier chemin optique dans une plage d'angles d'incidence ($\pm\alpha$) par rapport audit premier chemin optique ;

ledit hologramme tri-dimensionnel (26) représentant un ensemble tri-dimensionnel d'éléments lenticulaires présentant une configuration effective pour la réduction de la variation chromatique dans lesdites images affichées, l'écran présentant une variation chromatique (C) inférieure ou égale à environ 5 pour tous lesdits angles d'incidence ($\alpha$) de ladite plage, où ladite plage d'angles d'incidence ($\pm \alpha$) est supérieure à 0° et inférieure ou égale à environ 30° par rapport audit premier chemin optique, comme déterminé par la valeur maximale obtenue à partir de l'une des expressions suivantes :

$$C(\Theta) = 20 \cdot \log_{10}(\frac{(rouge(\Theta))}{(bleu(\Theta))})$$

$$C(\Theta) = 20 \cdot \log_{10}(\frac{(vert(\Theta))}{(bleu(\Theta))})$$

Où $\Theta$ correspond à n'importe quel angle dans la plage ($\pm \beta$) d'angles de vision horizontaux, C($\Theta$) correspond à la variation chromatique à l'angle $\Theta$, rouge($\Theta$) correspond au niveau de luminance de rouge à l'angle $\Theta$ bleu($\Theta$) correspond au niveau de luminance de bleu à l'angle Θ et vert(Θ) correspond au niveau de luminance de vert à l'angle Θ.

2. Téléviseur à projection conforme à la revendication 1, où :

la variation chromatique dudit écran (22) est inférieure ou égale à environ 2 pour tous lesdits angles d'incidence dans une première sous-plage d'angles d'incidence supérieure à 0° et inférieure ou égale à environ 10° ; et, la variation chromatique dudit écran (22) est inférieure ou égale à environ 5 pour tous lesdits angles d'incidence dans une seconde sous-plage d'angles d'incidence supérieure à environ 10° et inférieure ou égale à environ 30°.

3. Téléviseur à projection conforme à toutes les revendications précédentes, où ledit hologramme tri-dimensionnel présente les spécifications de performances suivantes :

Demi-angle de vision horizontal : 38° ± 3°
Demi-angle de vision vertical : 10° ± 1°
Gain d'écran : ≥ 8
Variation chromatique : ≤ 3.

4. Téléviseur à projection conforme à toutes les revendications précédentes, comprenant en outre un logement dans lequel lesdits projecteurs d'images sont disposés, ledit logement intégrant une zone de stockage disposée dans au moins l'un des deux emplacements respectivement au-dessous lesdits projecteurs d'image et au-dessus desdites lentilles d'angle.

FIG. 1

FIG. 2

FIG. 3

FIG. 4

SCREEN

LENS

PTV ELECTRONICS

FIG. 5

80
EXTRA ELECT.
84
SCREEN
50
LENS
22
PTV ELECTRONICS
82

FIG. 6

90
PTV ELECTRONICS
94
SCREEN
50
LENS
22

FIG. 7

100
PTV ELECTRONICS
104
SCREEN
50
LENS
22
VCR, ETC. STORAGE
102

FIG. 8